# EUROPÄISCHE PATENTSCHRIFT

(11) **EP 2 848 477 B1**
(45) Veröffentlichungstag und Bekanntmachung des Hinweises auf die Patenterteilung: **27.07.2016**
(21) Anmeldenummer: 14183339.2
(22) Anmeldetag: 03.09.2014
(51) Int. Cl.: B60S 9/18, B60D 1/66

(54) **An der Deichsel eines Anhängers befestigte Kurbelstütze**
Crank support attached to the drawbar of a trailer
Support de manivelle pouvant être fixé sur le timon d'une remorque

(30) Priorität: 17.09.2013 DE 202013104236 U
(43) Veröffentlichungstag der Anmeldung: 18.03.2015
(73) Patentinhaber: Gebr. Vitte GmbH & Co., 58339 Breckerfeld (DE)
(72) Erfinder: Winterhoff, Ulrich, 58339 Breckerfeld (DE)
(74) Vertreter: Kleine, Hubertus

(56) Entgegenhaltungen:
- AU-A4- 2008 100 910
- US-A1- 2007 152 425
- US-A1- 2010 187 489

## Beschreibung

Die Erfindung betrifft eine an der Deichsel eines Anhängers mittels einer Schwenkeinrichtung befestigte, eine drehbare Handkurbel aufweisende Kurbelstütze. Eine gattungsgemäße Kurbelstütze ist aus der US 2010/0187489 A1 bekannt.

Eine solche Kurbelstütze, wenn sie ein höhenverstellbares Stützrad aufweist, dient in Funktion, also wenn das Stützrad aufsteht, dem Rangieren und Abstellen eines Anhängers in einer von einem Zugfahrzeug abgekuppelten Stellung.

Lediglich zum Abstützen, gleichfalls in abgekuppelter Position, ist anstelle eines Stützrades bei einer anderen Ausführung die Kurbelstütze mit einer Stützplatte versehen, die flurseitig aufsteht.

Dabei ist diese Kurbelstütze, d.h. die Stützplatte bzw. die Stützrolle höhenverstellbar, wozu in einem Außenrohr der Kurbelstütze ein Spindeltrieb angeordnet ist, der über eine Handkurbel betätigbar ist.

Bei Nichtgebrauch, also in angekuppelter Stellung des Anhängers, ist die Kurbelstütze verschwenkt und in eine im Wesentlichen horizontale Lage gebracht und arretiert.

Zur Verschwenkung der Kurbelstütze ist eine Schwenkeinrichtung vorgesehen, mit einer gegenüber der Deichsel fest stehenden und an dieser befestigten Lasche, an der eine Schwenkplatte angelenkt ist, die fest mit der Kurbelstütze verbunden ist.

Insbesondere dann, wenn an der Deichsel ein Handhebel einer anhängerseitigen Feststellbremse angeschlossen ist, die etwa im Anschlussbereich der Kurbelstütze befestigt ist, können sich beim oder nach einem Hochschwenken der Kurbelstütze in eine Nichtgebrauchsstellung insoweit Probleme ergeben, als die Handkurbel in den Schwenkbereich des Handhebels der Feststellbremse ragt, die dann zum Gebrauch, wenn überhaupt, nur unter schwierigen Bedingungen betätigbar ist.

Gerade dann, wenn die Feststellbremse unmittelbar betätigt werden muss, ergibt sich aus einer sozusagen Fehllage der Handkurbel eine kritische, sogar gefährliche Situation, da der Feststellvorgang unter Umständen gar nicht, zumindest jedoch erschwert und verspätet erfolgen kann.

Grundsätzlich besteht auch die Gefahr, dass bei Betätigung des Handhebels der Feststellbremse die Handkurbel der Kurbelstütze beschädigt, vor allem verbogen wird, wenn diese im Schwenkbereich des Handhebels positioniert ist.

Der Erfindung liegt die Aufgabe zugrunde, eine Kurbelstütze der gattungsgemäßen Art so weiterzuentwickeln, dass die Handkurbel in Nichtgebrauchsstellung der Kurbelstütze behinderungsfrei positioniert ist.

Diese Aufgabe wird durch eine Kurbelstütze mit den Merkmalen des Anspruchs 1 gelöst.

Durch diese konstruktive Ausbildung wird nun zwangsweise verhindert, dass die Handkurbel beim Aufschwenken in eine Nichtfunktionsstellung, üblicherweise in eine horizontale Position, geführt wird und zwar derart, dass sie, bei Vorhandensein eines Handhebels einer Feststellbremse nicht in den Schwenkbereich dieses Handhebels gelangt.

Dabei ist das Führungselement so gestaltet, dass, unabhängig davon welche Drehstellung die Handkurbel beim Verschwenken einnimmt, in jedem Fall die vorbestimmte Lage erreicht wird.

Die zum Stand der Technik beschriebenen Nachteile durch das Fehlen einer solchen Zwangsführung stellen sich nun nicht mehr dar, so dass die Betriebssicherheit des Anhängers insgesamt, also einschließlich einer Betätigung der Feststellbremse, wesentlich verbessert wird. Die Gefahr eines möglichen Verbiegens der Handkurbel ist nun nicht mehr gegeben.

Nach einer vorteilhaften Weiterbildung der Erfindung ist das Führungselement als Biegeteil ausgebildet, beispielsweise aus einem Flacheisen oder einem Rundstahl, wodurch eine äußerst preiswerte Herstellung möglich ist.

Zur Befestigung des Führungselementes bietet sich die an der Deichsel angeschlossene dieser gegenüber fest stehende Lasche an, an der das Führungselement als Bügel form- und/oder stoffschlüssig angeschlossen ist.

Diese Verbindung ist so auszuführen, dass das Führungselement dauerhaft starr in seiner Position verbleibt.

Prinzipiell denkbar ist jedoch auch das Führungselement unmittelbar an der Deichsel zu befestigen und zwar dort bevorzugt in vorhandenen Schraubverbindungen, wobei lediglich das Führungselement entsprechend zu modifizieren ist.

Das als Bügel ausgebildete Führungselement kann einarmig im Sinne eines Kragarmes ausgebildet sein oder als Brücke, wobei in letzterem Fall entweder beide Enden an dem gegenüber der Deichsel fest stehenden Teil der Schwenkeinrichtung angeschlossen sind oder ein Ende daran und das andere an der Deichsel, in der bereits erwähnten Art und Weise.

Die Gestaltung des Führungselementes als Bügel ist gegenüber einem Kragarm insofern vorteilhaft, als die Gefahr eines Verbiegens bei unsachgemäßer Handhabung, wenn überhaupt dann nur sehr gering ist.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: eine erfindungsgemäße Kurbelstütze in Gebrauchsstellung in einer Seitenansicht
- Figur 2: die Kurbelstütze gemäß der Figur 1 in einer Draufsicht
- Figur 3: die Kurbelstütze in einer Nichtgebrauchsstellung in einer Seitenansicht
- Figur 4: die Kurbelstütze nach Figur 3 in einer perspektivischen Draufsicht.

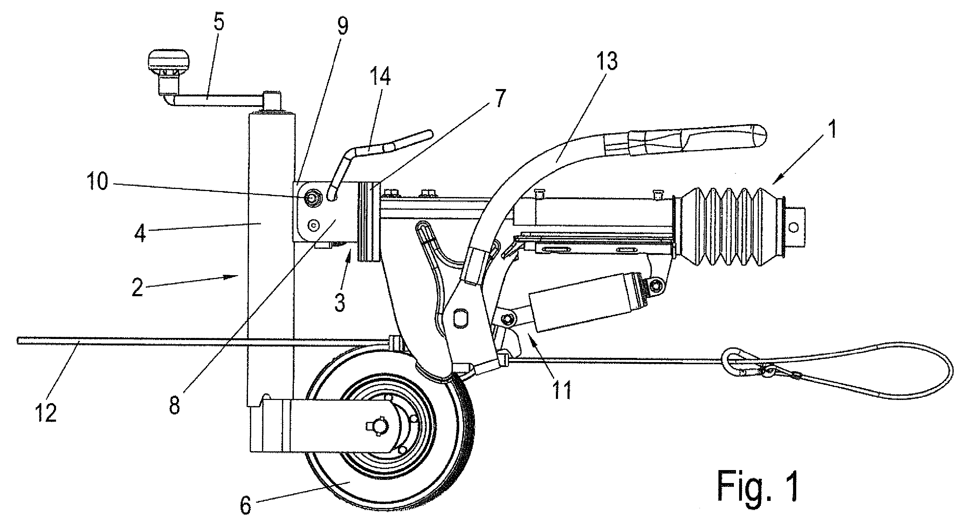

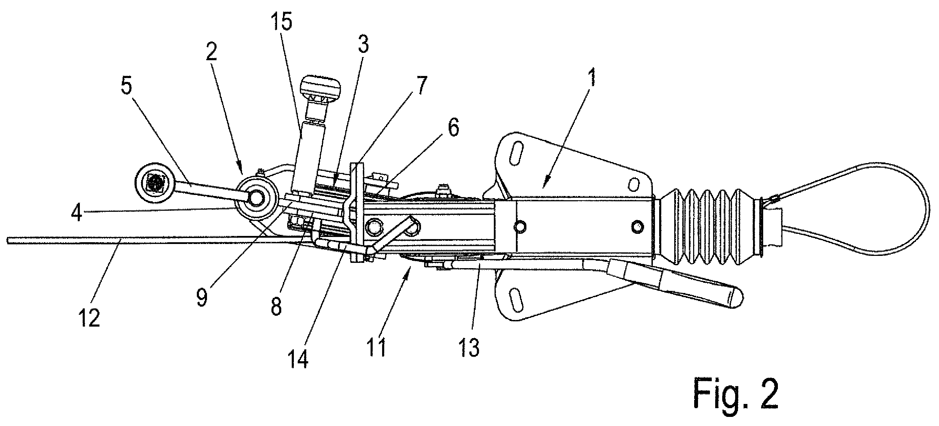

In den Figuren ist eine an der Deichsel 1 eines nicht dargestellten Anhängers mittels einer Schwenkeinrichtung 3 schwenkbar befestigte Kurbelstütze 2 dargestellt, die in den Figuren 1 und 2 in Gebrauchsstellung steht, in der ein Stützrad 6 der Kurbelstütze 2 flurseitig aufsteht.

Das Stützrad 6 ist mittels eines in einem Außenrohr 4 der Kurbelstütze 2 geführten Spindeltrieb verstellbar, wobei eine drehbare Handkurbel 5 mit dem Spindeltrieb in Eingriff steht. Weiter ist eine Feststellbremse 11 erkennbar, die über einen Handhebel 13 betätigbar ist.

Bei der in den Figuren 1 und 2 gezeigten Position der Kurbelstütze 2 ist die Feststellbremse 11 unbetätigt, wobei der Handhebel in einer abgeschwenkten Position steht, wie sie sich bei gelöster Feststellbremse ergibt.

Die Schwenkeinrichtung 3 weist eine Lasche 8 auf, die an einer Befestigungsplatte 7 angeschlossen ist, die wiederum an der Deichsel 1 befestigt ist, so dass die Lasche 8 gegenüber der Deichsel 1 fest steht. Am Außenrohr 4 der Kurbelstütze 2 ist eine Schwenkplatte 9 angeschlossen, die über einen Schwenkbolzen 10 mit der Lasche 8 schwenkbar verbunden ist.

Wie insbesondere die Figur 2 sehr deutlich wiedergibt, ist die Lasche 8 in horizontaler Ebene unter einem Winkel zur Deichsel 1 angeordnet, so dass die Kurbelstütze 2 nicht mit Bauteilen einer Auflaufeinrichtung, beispielsweise einer Bremsstange 12, kollidiert.

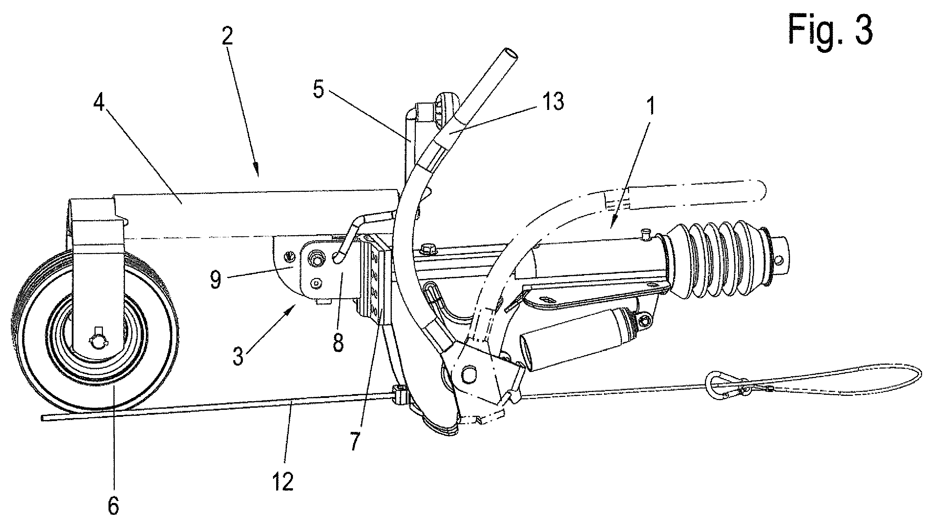

Im Übrigen ist die Kurbelstütze 2 in Gebrauchs- ebenso wie in Nichtgebrauchsstellung (Figur 3) arretiert, wozu ein Rastelement 15 vorgesehen ist, das die Schwenkbewegung der Schwenkeinrichtung 3 in den beiden Endpositionen der Kurbelstütze 2 blockiert.

Gemäß der Erfindung ist ein gegenüber der Deichsel 1 fest stehendes Führungselement 14 vorgesehen, an dem entlang die Handkurbel 5 während eines Verschwenkens der Kurbelstütze 2 in eine Nichtfunktionsstellung führbar ist.

Das Führungselement 14, im Beispiel als gebogene, einen Kragarm bildende Stange, ist an der Lasche 8 befestigt und in Richtung des Handhebels 13 ausgestellt, wie besonders deutlich in der Figur 2 zu erkennen ist.

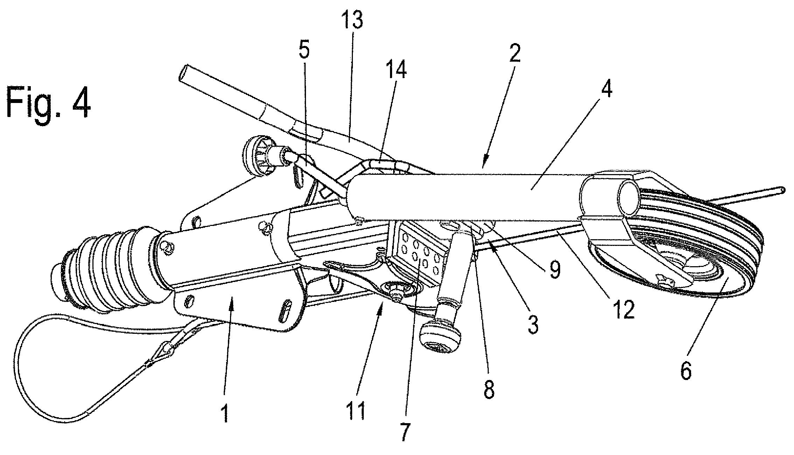

Dabei ist das Führungselement 14 so weit gegenüber der Lasche 8 vorstehend, dass der Handhebel 13 bei einer Betätigung der Feststellbremse ungehindert vorbeigeführt werden kann. Diese Stellung ist in den Figuren 3 und 4 erkennbar.

Bei einem Aufschwenken der Kurbelstütze 2 von einer Gebrauchs- in eine Nichtgebrauchsstellung gelangt die Handkurbel 5 von oben her zur Anlage an das Führungselement 14, unabhängig von ihrer Drehposition. Im weiteren Verlauf des Aufschwenkens wird, falls die Handkurbel 5 in Richtung der Stange 12 bzw. des Handhebels 13 verdreht ist, diese durch die Anlage am Führungselement 14 in eine Position gezwungen, in der der Schwenkbereich des Handhebels 13 frei bleibt.

Dabei ist das Führungselement 14 an seinem freien Ende in Richtung der Deichsel 1, also in die dem Handhebel 13 abgewandte Richtung, winklig umgebogen, so dass die anliegende Handkurbel 5 in eine Stellung weit außerhalb des Handhebels 13 bewegt ist, wie die Figur 4 sehr deutlich wiedergibt.

## Patentansprüche

1. An der Deichsel (1) eines Anhängers mittels einer Schwenkeinrichtung (3) befestigte, eine drehbare Handkurbel (5) aufweisende Kurbelstütze (2), **dadurch gekennzeichnet, dass** ein gegenüber der Deichsel (1) fest stehendes Führungselement (14) vorgesehen ist, an dem entlang die Handkurbel (5) während eines Verschwenkens der Kurbelstütze (2) in eine Nichtfunktionsstellung führbar ist.

2. Kurbelstütze nach Anspruch 1, **dadurch gekennzeichnet, dass** das Führungselement (14) an einer gegenüber der Deichsel (1) fest stehenden Lasche (8) der Schwenkeinrichtung (3) befestigt ist.

3. Kurbelstütze nach Anspruch 1 oder 2, wobei die Handkurbel (5) in Nichtgebrauchsstellung der Kurbelstütze (2) im Schwenkbereich eines an der Deichsel (1) angeordneten Handhebels (13) einer Feststellbremse positioniert ist, **dadurch gekennzeichnet, dass** das Führungselement (14) mit Abstand zum Handhebel (13) in dessen Schwenkbereich ragt und die Handkurbel (5) beim Verschwenken der Kurbelstütze (2) an der dem Handhebel (13) gegenüberliegenden Seite des Führungselementes (14) entlang führbar ist.

4. Kurbelstütze nach Anspruch 3, **dadurch gekennzeichnet, dass** das Führungselement (14) aus einer im Sinne eines Kragarmes ausgebildeten Stange besteht, die an ihrem freien Ende entgegengesetzt gerichtet zum Handhebel (13) abgewinkelt ist.

5. Kurbelstütze nach einem der vorhergehenden Ansprüche, **dadurch gekennzeichnet, dass** das Führungselement (14) als Bügel ausgebildet ist.

6. Kurbelstütze nach einem der vorhergehenden Ansprüche, **dadurch gekennzeichnet, dass** das Führungselement (14) aus Rund- oder Flachstahl besteht.

7. Kurbelstütze nach einem der vorhergehenden Ansprüche, **dadurch gekennzeichnet, dass** das Führungselement (14) als Biege- oder Stanzteil ausgebildet ist.

8. Kurbelstütze nach einem der vorhergehenden Ansprüche, **dadurch gekennzeichnet, dass** das Führungselement (14) nach oben gegenüber der Deichsel (1) vorsteht.

## Claims

1. A crank support (2) which is fastened to the drawbar (1) of a trailer by means of a pivoting device (3) and comprises a rotatable crank handle (5), **characterized in that** a guide element (14) is provided, which is fixed in relation to the drawbar (1) and along which the crank handle (5) can be guided during pivoting of the crank support (2) to a non-functional position.

2. A crank support according to claim 1, **characterized in that** the guide element (14) is fastened to a tab (8) of the pivoting device (3), said tab (8) being fixed in relation to the drawbar (1).

3. A crank support according to claim 1 or 2, wherein the crank handle (5), in the non-functional position of the crank support (2), is positioned in the pivoting range of a hand lever (13) of a parking brake arranged on the drawbar (1), **characterized in that** the guide element (14) protrudes at a distance from the hand lever (13) into its pivoting range, and the crank handle (5), during the pivoting of the crank support (2), can be guided along the side of the guide element (14) opposite the hand lever (13).

4. A crank support according to claim 3, **characterized in that** the guide element (14) consists of a rod formed within the terms of a cantilever, said rod being angled at its free end in the opposite direction to the hand lever (13).

5. A crank support according to one of the preceding claims, **characterized in that** the guide element (14) is formed as a bracket.

6. A crank support according to one of the preceding claims, **characterized in that** the guide element (14) consists of round or flat steel.

7. A crank support according to one of the preceding claims, **characterized in that** the guide element (14) is formed as a bent or punched part.

8. A crank support according to one of the preceding claims, **characterized in that** the guide element (14) protrudes upwardly in relation to the drawbar (1).

## Revendications

1. Support de manivelle (2) pouvant être fixé au timon (1) d'une remorque au moyen d'un dispositif pivotant (3) et présentant une manivelle à main (5) rotative, **caractérisé en ce qu'**il est prévu un élément de guidage (14) stationnaire par rapport au timon (1), le long duquel la manivelle à main (5) peut être guidée pendant que le support de manivelle (2) bascule dans une position de non-fonctionnement.

2. Support de manivelle selon la revendication 1, **caractérisé en ce que** l'élément de guidage (14) est fixé sur une patte (8) du dispositif pivotant (3) stationnaire par rapport au timon (1).

3. Support de manivelle selon la revendication 2, dans lequel la manivelle à main (5) est positionnée, dans la position de non-fonctionnement du support de manivelle (2), dans la zone de pivotement d'un levier à main (13) d'un frein d'immobilisation disposé sur le timon (1), **caractérisé en ce que** l'élément de guidage (14) dépasse à distance du levier à main (13) dans la plage de pivotement et la manivelle à main (5) peut être guidée, lors du basculement du support de manivelle (2), sur le côté de l'élément de guidage (14) faisant face au levier à main (13).

4. Support de manivelle selon la revendication 3, **caractérisé en ce que** l'élément de guidage (14) se compose d'une barre conformée comme un bras en porte-à-faux qui est coudée à son extrémité libre dans la direction opposée au levier à main (13).

5. Support de manivelle selon l'une des revendications précédentes, **caractérisé en ce que** l'élément de guidage (14) est conformé comme un étrier.

6. Support de manivelle selon l'une des revendications précédentes, **caractérisé en ce que** l'élément de guidage (14) est fait en acier rond et plat.

7. Support de manivelle selon l'une des revendications précédentes, **caractérisé en ce que** l'élément de guidage (14) est conformé comme une pièce pliée ou découpée à l'emporte-pièce.

8. Support de manivelle selon l'une des revendications précédentes, **caractérisé en ce que** l'élément de guidage (14) dépasse vers le haut par rapport au timon (1).
